Europäisches Patentamt

European Patent Office

Office européen des brevets

(11) Publication number: **0 259 064**
**A1**

# EUROPEAN PATENT APPLICATION.

(21) Application number: **87307341.5**

(22) Date of filing: **19.08.87**

(51) Int. Cl.4: **C08J 7/14 , C08J 7/04 ,
C08L 59/00**

(30) Priority: **01.09.86 JP 205328/86**

(43) Date of publication of application:
**09.03.88 Bulletin 88/10**

(84) Designated Contracting States:
**AT BE CH DE ES FR GB GR IT LI LU NL SE**

(71) Applicant: **POLYPLASTICS CO. LTD.
30 Azuchimachi 2-chome
Higashi-ku Osaka-shi(JP)**

(72) Inventor: **Ito, Haruyasu
885-11, Miyajima
Fuji-shi Shizuoka(JP)**
Inventor: **Suzuki, Yoshiharu
324, Miyashita
Fuji-shi Shizuoka(JP)**
Inventor: **Sato, Koichi
2944-5, Obuchi
Fuji-shi Shizuoka(JP)**

(74) Representative: **Jackson, Peter et al
HYDE, HEIDE & O'DONNELL 146 Buckingham
Palace Road
London SW1W 9TR(GB)**

(54) **Painted moulded polyacetal resin product.**

(57) An article of polyacetal is improved in weatherability by treating it with an acidic solution of sulphuric acid, phosphoric acid, hydrochloric acid or a mixture thereof so as to have a remaining coefficient of lustre of 5 to 90 percent on the surface and coating the article with a melamine paint, an alkyd paint, a urethane paint, an ester paint, an acrylic paint or a mixture thereof, having a thickness of 5 to 200 microns.

EP 0 259 064 A1

## PAINTED MOULDED POLYACETAL RESIN PRODUCT

The present invention relates to a painted moulded polyacetal resin product, in particular to a moulded polyacetal resin product whose surface is treated with acids and then painted to give a coloured beautiful external appearance and an improved weather resistance. That is to say, the present invention relates to a moulded polyacetal resin product which can be satisfactorily used as external parts of a car, such as door handles, door handle cases and door mirror stays, because of the above described coloured beautiful external appearance and improved weather resistance coupled with superior mechanical and physical properties thereof.

Diversification of applications for plastics materials and improvements in the plastics themselves have recently led in many cases to requirements for improved performance in such features as surface properties (external appearance and the like). For example, polyacetal resins have been adapted for use as external parts, thereby requiring surface processing, such as painting, for external appearance, design, weather resistance and the like.

However, polyacetal resins lack surface activity and as a result have a disadvantage in that they cannot be painted as they are. In order to overcome this disadvantage, the following measures have been tried:

1. A method in which polyacetal resins are coated with a primer and baked, and then painted.

For example, a moulded polyacetal resin product is coated with DU primer (manufactured by Kansai Paint Co., Ltd.), baked at 100 to 140°C for about 30 minutes, painted with a melamine-alkyd paint and the like, and then baked again at 100 to 140°C for about 30 minutes. However, this method has problems in that the initial adhesion of paint film is insufficient, and the paint film is remarkably lacking in resistance to water and heat.

2. A method in which polyacetal resins are etched with mixed chromium acid and then painted.

For example, a moulded polyacetal resin product is subjected to a surface treatment in an etching solution comprising 90 to 50 % 98 %-sulphuric acid, 1 to 10% of potassium bichromate and water for an appointed time and then painted. However, this method has problems in that the surface treatment proceeds too strongly and harms the base resin, cracks being generated on the surface, whereby not only is the strength of the material reduced but also paint is absorbed in the cracks and impairs the external appearance.

3. A method in which a moulded polyacetal resin product comprising calcium carbonate at a ratio of 3 to 25% by weight is etched in a mixed aqueous solution comprising sulphuric acid and phosphoric acid and then painted (Japanese Patent Laid-Open No Sho 55-78023).

For example, a moulded polyacetal resin product comprising calcium carbonate at a ratio of about 10% by weight is subjected to the etching process in an etching solution comprising 98 %-sulphuric acid, 85 %-phosphoric acid and water at a ratio of 40, 25 and 35 parts (by weight), respectively, and then painted. According to this method, although high adhesion can be achieved, physical properties, in particular tensile elongation, are reduced to an appreciable extent because of the large amount of calcium carbonate added. Much of the calcium carbonate is dissolved out by the treatment with acids to excessively roughen the surface, whereby in many cases an excellent external appearance cannot be achieved.

As above described, there are at present many problems including those of said methods 1, 2, 3 to be overcome in the painting of moulded polyacetal resin product.

In addition, in order to improve the weather resistance of polyacetal resins, agents such as ultraviolet ray absorbents and optical stabilisers, or carbon black have been added to the resins. However, in such methods, although the weather resistance is improved, difficult points have occured in that cracks are generated after using the agents for a long time, whitening occurs, or only black moulded product can be produced in the case where carbon black is added.

The present inventors found from their hard investigation, which aimed at the provision of a moulded polyacetal resin product having superior weather resistance, adhesion of paint film and external appearance while maintaining superior physical properties of polyacetal resins in view of the disadvantages of the conventional methods, that superior adhesion and a mirror-finish external appearance can be obtained by selecting the resin composition, the method of treating a moulded product with acids and the painting method and suitably combining them. The present invention was achieved on the basis of this finding.

That is to say, the present invention relates to a moulded polyacetal resin product whose surface is treated with an acidic solution containing at least one kind of acid selected from a group consisting of sulphuric acid, phosphoric acid and hydrochloric acid so that the remaining coefficient of lustre thereof may amount to 5 to 90% and is then painted with a paint selected from melamine paints, alkyd paints, urethane paints, ester paints, acrylic paints and mixtures thereof to give a film thickness of 5 to 200 μ.

According to the invention there is also provided an article of polyacetal which comprises a polyacetal and a paint coating thereon comprising a melamine paint, an alkyd paint, a urethane paint, an ester paint, an acrylic paint or a mixture thereof and having a thickness of 5 to 200 microns, the coating being provided after the article has been treated with an acidic solution containing sulphuric acid, phosphoric acid, hydrochloric acid or a mixture thereof so as to have a remaining coefficient of lustre of 5 to 90 percent.

The polyacetal may be substantially free of an inorganic filler being soluble in the acid. Alternatively it may contain 2 parts by weight or less, based on 100 parts by weight of the polyacetal, of the filler.

The invention further provides a process for preparing an article of polyacetal, which comprises treating an article of polyacetal with an acidic solution of sulphuric acid, phosphoric acid, hydrochloric acid or a mixture thereof so that the treated article may have a remaining coefficient of lustre of 5 to 90 percent on the surface and coating the article with a paint of a melamine paint, an alkyd paint, a urethane paint, an ester paint, an acrylic paint or a mixture thereof, having a thickness of 5 to 200 microns.

The polyacetal resins used in the present invention are not especially limited. The effects of the invention can be achieved by all of homopolymers, that is to say polymers obtained by polymerising aldehyde or trioxane (preferably subjected to the stabilising treatment of ends), binary or tertiary or higher copolymers obtained by copolymerising comonomers such as trioxane and cyclic ether or cyclic acetal, and modified polyacetal resins obtained by modifying the above described polyacetal resins by cross-linking or graft-copolymerising using the known methods. In addition, known polymers of different kinds may be blended to these base resins.

It is preferable that a moulded resin product according to the present invention substantially comprises no acid-soluble inorganic filler, for example carbonates, phosphates, hydroxides, oxides and the like of the II-group metals in the Periodic Table of Elements. When the method according to the present invention is applied to such a moulded product, a painted product superior in adhesion, external appearance and durability can be stably obtained. In addition, said acid-soluble inorganic fillers may be added to polyacetal resins at a ratio of 2 parts by weight or less based on 100 parts by weight of the polyacetal resins. Also in this case, the effects (painting properties) of the present invention is not significantly hindered. However, if these acid-soluble inorganic filler are added to the polyacetal resins at a ratio exceeding 2 parts by weight based on 100 parts by weight of the polyacetal resins, the deterioration of physical properties, such as tensile elongation, of the composite itself cannot be disregarded and also the roughening of the surface of the moulded product with acids becomes difficult to control, whereby excessive surface roughening of the surface of the moulded product with acids becomes difficult to control, whereby excessive surface roughening occurs. As a result, undesirable problems occur in that the physical properties are deteriorated or the surface state suitable for painting cannot be obtained.

Besides, various kinds of additive, which have been usually added to polyacetal resins, such as heat stabilisers, anti-oxidants, ultraviolet ray absorbents, antistatic agents, nuclear agents, colouring agents (particularly in the case where transparent paints are used), known acid-insoluble inorganic fillers such as glass fibre, glass flake, glass bead and mica and organic additives, may be added to the moulded resin product according to the present invention so far as the physical properties and the roughening of the surface of the moulded product with acids are not adversely affected.

Acids used in the treatment with acids in the present invention preferably include sulphuric acid, hydrochloric acid and phosphoric acid. That is to say, an acidic solution comprising at least one kind of these inorganic acids is used.

It is one of the characteristics of the present invention that the etching process is continued until the moulded product arrives at the specified surface state in the surface treatment of the moulded product with such an acidic solution. Although various kinds of method can be contemplated for the measurement of this surface state, the present inventors found that the judgement based on the remaining coefficient of lustre of the moulded product was most advantageous and practical, and used the judgement based on this value.

That is to say, in the present invention it is preferable that the moulded product is subjected to the surface treatment until the remaining coefficient of lustre arrives at 5 to 90%, and only the moulded product showing such a surface state can be painted to show superior adhesion, external appearance and durability. Moulded products having a remaining coefficient of lustre of 90% or more cannot be painted to show superior initial adhesion and durability while if the remaining coefficient of lustre is 5% or less, fine pores, fine cracks and the like formed by etching becomes too deep and the paint is absorbed by them, whereby the mirror-finished external appearance cannot be obtained. The remaining coefficient of lustre is preferably 10 to 90%.

In order to give the remaining coefficient of lustre of 5 to 90% to the surface of the moulded product, the moulded product is preferably treated at temperatures of 20 to 50°C for 1 to 15 minutes in the treating solution comprising 98%-sulphuric acid, 85%-phosphoric acid and water at a ratio of 50 to 30/30 to 15/20 to 55% by weight or 98%-sulphuric acid, 36%-hydrochloric acid and water at a ratio of 60 to 35/20 to 10/20 to 55% by weight. However, the conditions of the treatment with acids according to the present invention are not limited to these ones. In short, it is necessary only to suitably select the composition of acids, the treating temperature, the treating time and the like such that the remaining coefficient of lustre may amount to 5-90%.

Next, melamine paints, alkyd paints, ester paints, acrylic paints, urethane paints and mixtures thereof can be satisfactorily used after the treatment with acids.

The painting method is not specially limited and can be easily carried out by every method, for example spraying, brushing and the like.

According to the present invention, the painting is preferably carried out so that the film thickness is 5 to 200 μ. If the film thickness is 5 μ or less, the influence of the etched resin surface appears strongly, such that a superior external appearance cannot be obtained, while if the film thickness is 200 μ or more, the physical properties, for example tensile elongation, of the moulded product deteriorate or sufficient resistance to heat and water cannot be given to the paint film.

In addition, in the present invention the moulded product, having been subject to the treatment with acids, may be effectively coated with a primer prior to painting.

The painted moulded polyacetal resin product according to the present invention is most suitable for interior and exterior parts which require a superior external appearance in addition to mechanical and physical characteristics, such as high strength, in particular for interior and exterior parts of a car such as the door handle, door handle case and door mirror stay.

The high performance, required for these uses, in the strength of the part itself and in the durability, external appearance, weather resistance and the like of the paint film after repeated use, is provided by the painted moulded polyacetal resin product obtained by the resin composition, the surface treatment and the painting method according to the present invention.

Effects of the Invention

A moulded polyacetal resin product according to the present invention has the following advantages:
1. It is superior in adhesion and durability, and can be painted to give superior lustre and external appearance.
2. The weather-resistance is improved.
3. Interior and exterior car parts made of polyacetal resin having colours other than black can be produced.
4. Excessive fillers are not required.

Preferred Embodiments

The present invention will be described in more detail with reference to the preferred embodiments but they are not restrictive.

Examples 1 to 4 and Comparative Examples 1 to 3

The surface of the moulded polyacetal resin product was painted by the following procedure and evaluated. The results are shown in Table 1.

1. Test piece:

(Polyacetal resin; DURACON M90-02 manufactured by Polyplastics Co Ltd), flat plate of 50 mm × 70 mm.

## 2. Etching process:

1) Degreasing: The test piece was immersed in TOPDESCALE SK (acidic degreasing agent manufactured by Okuno Pharmaceutical Industries Co Ltd.) at 23°C for 3 minutes.

2) Etching with acids: Under the condition as shown in Table 1

3) Neutralisation: The etched test piece was immersed in a 5 %-NaOh aqueous solution at 23°C for 2 minutes.

4) Drying: In a hot blast drier (40°C $\times$ 15 min). A washing step was included after each of steps 1 to 3.

## 3. Painting method

The test piece, which was treated in the above described procedure, was painted with melamine alkyd paints (AMILACQ manufactured by Kansai Paint Co Ltd) by spraying and baked at 140°C for 30 minutes in a hot blast drier.

In addition, in the present Examples and Comparative Examples the thickness of paint film was within a range of 20 to 50 $\mu$ as calculated from an increment of weight of the test piece after painting (weight of paints) and the painting area.

## 4. Evaluation method

1) Remaining coefficient of lustre: The remaining coefficient of lustre was determined by measuring the lustre of the test piece, which was subjected to the etching process under each condition, at an incident angle of 45° using a lustre meter manufactured by Suga Test Machinery Co Ltd. and comparing the measured value with the initial lustre.

2) External appearance after painting: The test piece, which was subjected to the etching process under each condition, was painted under the same condition and the painted test piece was visually observed for absorption of paints, fine cracks, flatness and the like.

3) Adhesion of paint film: 100 meshes of crosscut were formed on the painted test piece at regular intervals of 1 mm by means of a cutter knife, and CELOTAPE® manufactured by NICHIBAN Co Ltd was pressed on the test piece and pulled off from the test piece at one stroke. The evaluation was carried out by counting the number of remaining meshes. The adhesion was measured immediately after painting and after the water-proof test for 240 hours at 40°C.

4) Weather-resistance: The painted test piece and a non-painted test piece were placed in the sun shine weather meter manufactured by Suga Test Machinery Co Ltd ( a temperature of the black panel is 63°C and a rain spray is installed) for 2,000 hours. The test piece was taken out and the external appearance thereof was observed.

For comparison, also the test pieces painted without etching and painted after coating with a primer were evaluated in the same manner. Also the weather-resistance test was carried on the non-painted test piece. The results are shown in Table 1 collectively.

Table 1

| Example | Concentration of etching solution | Evaluation item | 1 minute 30°C | 1 minute 40°C | 3 minute 30°C | 3 minute 40°C | 5 minute 30°C | 5 minute 40°C | 10 minute 30°C | 10 minute 40°C | 15 minute 30°C | 15 minute 40°C | 30 minute 30°C | 30 minute 40°C |
|---|---|---|---|---|---|---|---|---|---|---|---|---|---|---|
| Example 1 ( ):Comparative example | 98%$H_2SO_4$/85%$H_3PO_4$/Water = 40/25/35 (% by weight) | 1. Remaining coefficient of luster(%) | 99.6 | 80.4 | 35.0 | 18.9 | 27.2 | 16.0 | 14.5 | 4.5 | 9.2 | 4.5 | | |
| | | 2. External appearance*1 | O | O | O | O | O | O | O | × | △ | × | | |
| | | 3. Adhesion*2 (initial value) | 90-100 | 100 | 100 | 100 | 100 | 100 | 100 | 100 | 100 | 100 | | |
| | | (after the water-proof test) | 50-60 | 100 | 100 | 100 | 100 | 100 | 100 | 100 | 100 | 100 | | |
| | | 4. Weather-resistance*3 | – | O | O | O | O | O | O | – | – | – | | |
| Example 2 ( ):Comparative example | 98%$H_2SO_4$/85%$H_3PO_4$/Water = 36/22.5/41.5 (% by weight) | 1. Remaining coefficient of luster(%) | | | 99.3 | 41.1 | 99.3 | 44.8 | 46.4 | 39.2 | 40.1 | 11.8 | | |
| | | 2. External appearance*1 | | | O | O | O | O | O | O | O | O | | |
| | | 3. Adhesion*2 (initial value) | | | 90-100 | 100 | 90-100 | 100 | 100 | 100 | 100 | 100 | | |
| | | (after the water-proof test) | | | 40-50 | 100 | 80-90 | 100 | 100 | 100 | 100 | 100 | | |
| | | 4. Weather-resistance*3 | | | – | O | – | O | O | O | O | O | | |
| Example 3 ( ):Comparative example | 98%$H_2SO_4$/85%$H_3PO_4$/Water = 32/20/48 (% by weight) | 1. Remaining coefficient of luster(%) | | | | 99.5 | | 96.4 | | 56.2 | 98.7 | 41.7 | 82.0 | 37.0 |
| | | 2. External appearance*1 | | | | O | | O | | O | O | O | O | O |
| | | 3. Adhesion*2 (initial value) | | | | 90-100 | | 100 | | 100 | 90-100 | 100 | 100 | 100 |
| | | (after the water-proof test) | | | | 50-60 | | 80-90 | | 100 | 80-90 | 100 | 100 | 100 |
| | | 4. Weather-resistance*3 | | | | – | | – | | O | – | O | O | O |
| Example 4 | 98%$H_2SO_4$/85%$H_3PO_4$/Water = 47/13/40 | 1. Remaining coefficient of luster(%) | 98.5 | | 29.3 | | 21.7 | | 11.6 | | 6.8 | | | |
| | | 2. External appearance*1 | O | | O | | O | | O | | △ | | | |
| | | 3. Adhesion*2 (initial value) | 90-100 | | 100 | | 100 | | 100 | | 100 | | | |
| | | (after the waterproof test) | 60-70 | | 100 | | 100 | | 100 | | 100 | | | |
| | | 4. Weather-resistance*3 | – | | O | | O | | O | | – | | | |
| Comparative Example 1 | Painted without etching | 1. Remaining coefficient of luster(%) | 100 | | | | | | | | | | | |
| | | 2. External appearance*1 | | | | | | | | | | | | |
| | | 3. Adhesion*2 (initial value) | 0 (Very easily peeled off) | | | | | | | | | | | |
| | | (after the water-proof test) | 0 (Very easily peeled off) | | | | | | | | | | | |
| | | 4. Weather-resistance*3 | – | | | | | | | | | | | |
| Comparative Example 2 | Painted after coating with a primer without etching | 1. Remaining coefficient of luster(%) | 100 | | | | | | | | | | | |
| | | 2. External appearance*1 | | | | | | | | | | | | |
| | | 3. Adhesion*2 (initial value) | 70-80 | | | | | | | | | | | |
| | | (after the water-proof test) | 10-20 | | | | | | | | | | | |
| | | 4. Weather-resistance*3 | – | | | | | | | | | | | |
| Comparative Example 3 | Non-painted test piece | 4. Weather-resistance | × (Discoloration and crack-generation) | | | | | | | | | | | |

0 259 064

Notes

*1   As to the external appearance, O shows the case where the absorption of paints by cracks does not occur and the surface of the test piece is flat, and Δ shows the case where the reflected image grows slightly dim but the surface of the test piece is flat and X shows the case where the surface of the test piece is lacking in flatness.

*2   As to the adhesion, the remaining coefficient of meshes crosscut at regular intervals of 1 mm is shown.

*3   As to the weather-resistance, shows the case where the discolouration and crack-generation do not occur and X shows other cases.

In addition, for the sake of convenience in making the Table, the cases where the remaining coefficient of lustre is smaller that 5 % or larger than 90 % are also included in the column of Examples 1 to 4 as comparative examples.

Examples 5 to 9 and Comparative Examples

Mixtures comprising polyacetal resin (DURACON M90-02 manufactured by Polyplastics Co Ltd) and calcium carbonate added to polyacetal resins at a ratio of 1 % by weight and 8 % by weight were moulded by the injection moulding to prepare test pieces for the tensile test. The resulting test pieces were subjected to the same procedure as in the Examples 1 to 4 excepting that the etching process was carried out under the conditions as shown in Table 2. In all cases the thickness of paint film was 20 to 50 μ. The results are shown in Table 2.

Table 2

| | Resin composition | Etching condition [*1] | | Evaluation | | | | | | | | | | | |
|---|---|---|---|---|---|---|---|---|---|---|---|---|---|---|---|
| | | | | Non-treated, non-painting | | After etching | | | After painting | | | | | | |
| | | Temperature | Time | Tensile strength $(kg/cm^2)$ | Elongation ($\%$) | Tensile strength $(kg/cm^2)$ | Elongation ($\%$) | Remaining coefficient of luster ($\%$) | External appearance | Adhesion | | Water resistance | Tensile strength $(kg/cm^2)$ | Elongation ($\%$) |
| | | | | | | | | | | Adhesion | After the water-proof test | | | |
| Example 5 | Polyacetal/CaCO$_3$ = 100/0 (% by weight) | 30°C | 3 min. | 623 | 92 | 624 | 93 | 33.0 | ○ | 100 | 100 | ○ | 630 | 78 |
| Example 6 | Polyacetal/CaCO$_3$ = 100/0 (% by weight) | 30°C | 10 min. | 623 | 92 | 627 | 86 | 14.7 | ○ | 100 | 100 | ○ | 628 | 76 |
| Example 7 | Polyacetal/CaCO$_3$ = 99.0/1.0 (% by weight) | 30°C | 3 min. | 620 | 87 | 621 | 90 | 21.0 | ○ | 100 | 100 | ○ | 632 | 75 |
| Example 8 | Polyacetal/CaCO$_3$ = 99.0/1.0 (% by weight) | 30°C | 10 min. | 620 | 87 | 618 | 78 | 11.2 | ○ | 100 | 100 | ○ | 624 | 70 |
| Example 9 | Polyacetal/CaCO$_3$ = 92/8 (% by weight) | 30°C | 3 min. | 628 | 63 | 624 | 47 | 5.3 | △ | 100 | 100 | — | 626 | 39 |
| Comparative example 4 | Polyacetal/CaCO$_3$ = 92.8 (% by weight) | 30°C | 10 min. | 628 | 63 | 615 | 36 | 3.5 | × | 100 | 100 | — | 623 | 31 |

*1 Acid composition: 98 % - sulfuric acid/85 % - phosphoric acid/water 40/25/35 (% by weight)

0 259 064

TABLE 2

Examples 10, 11 and Comparative Examples 5, 6

The tensile test pieces formed of polyacetal resin (DURACON M90-02 manufactured by Polyplastics Co Ltd) were subjected to the procedure in the same manner as in Examples 1 to 4 excepting that they were treated in the etching solution comprising 98 %-sulphuric acid, 85 %-phosphoric acid and water at a ratio of 40/25/35 (% by weight). In all cases the remaining coefficient of lustre was within a range of 20 to 35 % after the treatment with acids. In addition, in the present Examples and Comparative Examples the evaluation was carried out with changing the thickness of paint film. The results are shown in Table 3.

Table 3

| | Thickness of paint film[1] ($\mu$) | Evaluation | | | | | | |
|---|---|---|---|---|---|---|---|---|
| | | External appearance | Adhesion | | Weather-resistance | Heat-resistance[4] | Tensile strength (kg/cm$^2$) | Elongation (%) |
| | | | Initial | After the water-proof test | | | | |
| EXAMPLE 10 | About 20 ~ 50 | ○ | 100 | 100 | ○ | ○ | 632 | 76 |
| EXAMPLE 11 | About 50 ~ 80 | ○ | 100 | 100 | ○ | ○ | 628 | 76 |
| COMPARATIVE | About 0 ~ 5[2] | x[3] | — | — | — | — | 625 | 82 |
| COMPARATIVE EXAMPLE 6 | About 400 ~ 500 | ○ | 100 | 100 | ○ | x (Partial crack-generation) | 631 | 54 |

*1 This was calculated from the increment of weight of the test piece after painting (weight of paints) and the painting area. Although the irregular painting within one test piece and among the test pieces is expected, those, which appear to be within a nearly appointed range, were collected to be evaluated.

*2 The paint film could not be controlled in thickness and the sufficient painting could not be achieved. (That is to say, non-painted portions are remained.)

*3 The painted portions are lack in flatness on account of the reason as described in *2.

*4 At 100°C for 500 hours

0 259 064

Example 12

An outer handle for use in cars was produced by injection moulding polyacetal resin (DURACON M90-02 manufactured by Polyplastics Co Ltd). This was treated in the etching solution comprising 98 %-sulphuric acid, 85 %-phosphoric acid and water at a ratio of 40/25/35 (% by weight) at 30°C for 10 minutes to obtain treated product showing a remaining coefficient of lustre of 12 to 20 %. Subsequently, the obtained treated product was painted with melamine-alkyd paints, urethane paints, melamine-alkyd paints and ester paints by spraying and then baked. All of the painted products showed good external appearance and the superior adhesion after painting and after the water-proof test, and also showed no abnormality in the weather-resistance test and the heat-resistance test.

**Claims**

1. An article of polyacetal which comprises a polyacetal and a coating thereon comprising a melamine paint, an alkyd paint, a urethane paint, an ester paint, an acrylic paint or a mixture thereof and having a thickness of 5 to 200 microns, the coating being provided after the article has been treated with an acidic solution containing sulphuric acid, phosphoric acid, hydrochloric acid or a mixture thereof so as to have a remaining coefficient of lustre of 5 to 90 percent.

2. An article as claimed in Claim 1, in which the polyacetal is substantially free of an inorganic filler being soluble in the acid.

3. An article as claimed in Claim 1, in which the polyacetal contains 2 parts by weight or less, based on 100 parts by weight of the polyacetal, of an inorganic filler being soluble in the acid.

4. An article as claimed in any one of claims 1 to 3 in which the remaining coefficient of lustre after the article has been treated with the acidic solution is from 10 to 90 percent.

5. An article as claimed in any one of claims 1 to 4 including a primer coating applied prior to the paint coating.

6. A process for preparing an article of polyacetal, which comprises treating an article of polyacetal with an acidic solution of sulphuric acid, phosphoric acid, hydrochloric acid or a mixture thereof so that the treated article may have a remaining coefficient of lustre of 5 to 90 percent on the surface and coating the article with a paint of a melamine paint, an alkyd paint, a urethane paint, an ester paint, an acrylic paint or a mixture thereof, having a thickness of 5 to 200 microns.

7. A process as claimed in claim 6 in which the article is treated with the acidic solution at a temperature of 20 to 50°C for 1 to 15 minutes.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | GB-A-2 091 274 (POLYPLASTICS) * Claims 1,2,6,7; page 1, lines 16-24,31-60; examples 1-10,13,14,19,20 * | 1-4,6,7 | C 08 J 7/14 C 08 J 7/04 C 08 L 59/00 |
| Y | | 1,5 | |
| Y | GB-A- 986 032 (RINSHED-MASON) * Claims 1,12; page 1, lines 14-25; page 3, line 104 – page 4, line 33 * | 1,5 | |
| X | US-A-3 235 426 (W.M. BRUNER) * Claims 1,2; column 2, lines 7-20,52-67; column 4, lines 25-37; examples 15-18 * | 1,2,4,6 ,7 | |

TECHNICAL FIELDS SEARCHED (Int. Cl.4)

C 08 J

The present search report has been drawn up for all claims

| Place of search | Date of completion of the search | Examiner |
|---|---|---|
| THE HAGUE | 25-11-1987 | HALLEMEESCH A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)